Europäisches Patentamt

European Patent Office

Office européen des brevets

(19)

(11) Veröffentlichungsnummer: **0 257 397 B1**

(12) **EUROPÄISCHE PATENTSCHRIFT**

(45) Veröffentlichungstag der Patentschrift: **15.01.92**

(21) Anmeldenummer: **87111360.1**

(22) Anmeldetag: **06.08.87**

(51) Int. Cl.⁵: **B08B 3/02**, A01K 73/06

(54) **Vorrichtung zum Reinigen von Fischnetzen.**

(30) Priorität: **14.08.86 DK 3866/86**

(43) Veröffentlichungstag der Anmeldung:
**02.03.88 Patentblatt 88/09**

(45) Bekanntmachung des Hinweises auf die
Patenterteilung:
**15.01.92 Patentblatt 92/03**

(84) Benannte Vertragsstaaten:
**AT BE CH DE ES FR GB GR IT LI LU NL SE**

(56) Entgegenhaltungen:
**EP-A- 0 061 792**
**DE-A- 1 422 984**
**FR-A- 1 470 011**
**FR-A- 2 305 248**
**US-A- 2 194 565**

(73) Patentinhaber: **Jensen, Ove**
**Agersogardsvej 7**
**DK-4230 Skaelskor(DK)**

(72) Erfinder: **Jensen, Ove**
**Agersogardsvej 7**
**DK-4230 Skaelskor(DK)**

(74) Vertreter: **Siebmanns, Hubertus**
**Götalands Patentbyra AB Box 154**
**S-561 22 Huskvarna(SE)**

## Beschreibung

Vorliegende Erfindung betrifft eine Vorrichtung zum Reinigen von Fischnetzen.

Nach einer gewissen Anwendungszeit sind die Maschen eines Fischnetzes durch Modder, Schalen, Schalentiere, Kleinfisch u. dgl. zugesetzt und zu reinigen, damit das Netz erneut angewendet werden kann.

Wie unter Berufsfischern allgemein bekannt, wurde diese Reinigung bisher derart vorgenommen, dass man das Netz in eine Tonne legte, wo es über einen Monat lang liegen blieb. Hierbei wurden die Verunreinigungen ganz oder teilweise durch Mikroorganismen zersetzt. Dieses Reinigungsverfahren ist jedoch zeitraubend und nicht besonders effektiv.

Es ist daher eine Aufgabe vorliegender Erfindung, eine Vorrichtung zu schaffen, mittels der ein Fischnetz in sehr kurzer Zeit effektiv gereinigt werden kann. Dies wird durch die in Anspruch 1 angegebene Vorrichtung erreicht.

Durch das in Anspruch 2 Angegebene wird erreicht, dass die Vorrichtung derart eingestellt werden kann, dass der Reinigungseffekt maximal ist.

Durch das in Anspruch 3 Angegebene wird eine Geschwindigkeitssteigerung der Luft erreicht, die durch das Auslassende eingesaugt wird, wobei eine effektive Mischung von Wasser und Luft erzielt wird.

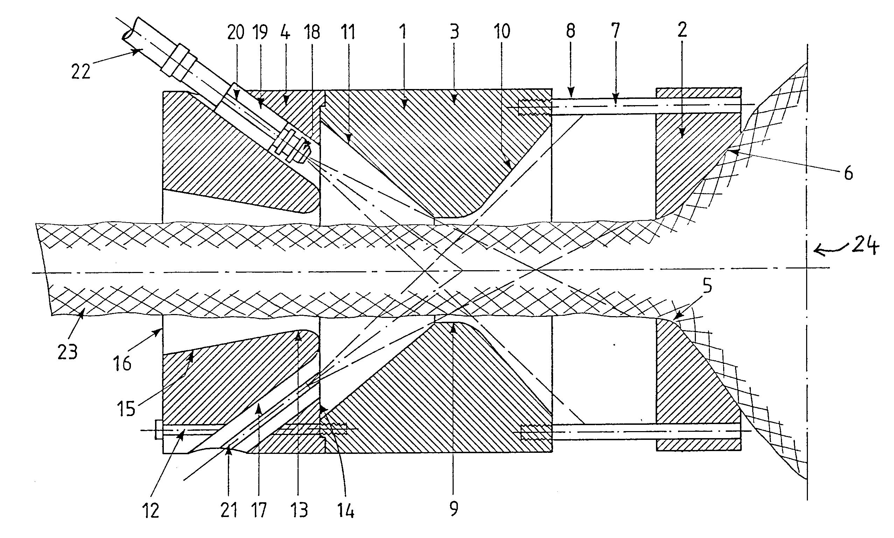

Die Erfindung wird nachfolgend näher beschrieben unter Hinweis auf die Zeichnung, welche schematisch einen Schnitt durch eine Vorrichtung gemäss der Erfindung zeigt.

Wie in der Zeichnung dargestellt, ist die Vorrichtung 1 rotationssymmetrisch aufgebaut und besteht aus einem Einlassteil 2, einem Mittelteil 3 und einem Auslassteil 4, durch welche Teile sich eine Durchlassöffnung 24 erstreckt.

Der Einlassteil 2 ist ausgeführt als ein Rondell mit einem innen abgerundeten Einlassabschnitt 5 und einer kegelförmigen Einlassfläche 6. Der Brustwinkel der Fläche 6 kann 60° betragen.

Der Einlassteil 2 ist mittels einer Anzahl Bolzen 7 an und in einem gewissen Abstand zu dem Mittelteil 3 angebracht, wobei eine umlaufende Wasserauslassöffnung 8 geschaffen wird.

Der Mittelteil 3 besitzt ebenso einen inneren, abgerundeten Mittelabschnitt 9, der auf beiden Seiten von kegelförmigen Flächen 10 und 11 abgegrenzt ist. Der Brustwinkel der Zuführfläche 10 kann 40° und der der Abführfläche 11 50° betragen. Die Durchmesser des Mittelabschnittes 9 kann gleich dem des Einlassabschnittes 5 sein.

Der Auslassteil 4 ist auf dem Mittelteil 3 mit Schrauben 12 befestigt.

Der Auslassteil 4 besitzt einen inneren, abgerundeten Auslassabschnitt 13, der auf der Anlaufseite von einer lotrechten Fläche 14 und auf der Ablaufseite von einer kegelförmigen Ausführfläche 15 abgegrenzt ist, wovon die letztere in Richtung auf ein Auslassende 16 zunehmenden Durchmesser aufweist.

Der Auslassabschnitt 13 kann einen etwas grösseren Durchmesser aufweisen als die Abschnitte 5 und 9.

Im Auslassteil 4 sind Kanäle 17 vorgesehen, deren Zentrumlinien schräg vorwärts zum Mittelabschnitt 9 gerichtet sind und sich in einem Punkte der Symmetrieachse der Vorrichtung schneiden.

Es sind wenigstens zwei entgegengesetzte Anordnungen von Kanälen 17 vorhanden, die in zwei zueinander winkelrechten Ebenen vorgesehen sind. Die Kanäle können in einem Winkel von 55° zur Symmetrieachse der Vorrichtung angeordnet sein.

In den Kanälen 17 sind Verteilerdüsen 18 vorgesehen, deren Verteilerwinkel einstellbar ist. Die Düsen sind an einem zylinderförmigen Halter 19 angebracht, welcher mit leichter Gleitpassung in den Kanälen 17 angeordnet ist. Der Halter 19 kann im Verhältnis zu den Kanälen 17 steuerbar sein, indem eine Feder 20 am Halter mit einer Nute 21 in Eingriff steht, welche Nute in den Kanälen vorgesehen ist, und der Halter lässt sich in seiner Lage mit Hilfe einer nicht gezeigten Schraube festspannen.

An dem Halter 19 sind Schläuche 22 festgesetzt, durch welche Wasser von einer nicht gezeigten Pumpe zugeführt wird.

Die Kanäle 17 sind folglich derart im Verhältnis zum Mittelteil 3 angeordnet und ausgerichtet, dass die Strahlenbündel von den Düsen ungehindert durch den Mittelabschnitt 9 und durch ein Fischnetz passieren können, welches durch die Vorrichtung gezogen wird. Das Fischnetz wird von den Wasserstrahlen zentriert und leicht zusammen gedrückt, so dass es die Abschnitte 9 und 13 nicht berührt.

Hierbei wird der Widerstand gegen das Passieren des Netzes vermindert und das Netz lässt sich leicht von Hand durch die Vorrichtung ziehen.

Während des Reinigens wird Luft durch das Ende 16 eingesaugt. Indem statischer Druck in Geschwindigkeitsdruck umgesetzt wird, geschieht ein effektives Mischen von Wasser und Luft, so durch die Reinigungswirkung wesentlich verbessert wird. Das verschmutzte Wasser verlässt die Vorrichtung durch die Wasserauslassöffnung 8.

Zur Reinigung lässt sich Salzwasser verwenden und die Vorrichtung kann auf einem Schiff angebracht werden, so dass die Fischnetze unmittelbar nach einem Fischfang gereinigt werden können.

Die Vorrichtung lässt sich aus Metall oder aus Polyäthylen herstellen.

Die gezeigte und beschriebene Ausführungsform soll nur als Beispiel der Erfindung dienen.

**Patentansprüche**

1. Vorrichtung zum Reinigen von Fischnetzen, **dadurch gekennzeichnet, dass** die Vorrichtung (1) zentral eine im wesentlichen zylinderförmige oder schwach kegelförmige Durchlassöffnung (24) für ein Netz (23) aufweist, welche Öffnung gebildet wird von einem Einlassabschnitt (5) in einem Einlassteil (2), einem Mittelabschnitt (9) in einem Mittelteil (3) und einem Auslassabschnitt (13) in einem Auslassteil (4), dass im Bereich zwischen dem Einlassteil (2) und dem Mittelteil (3) sich eine Auslassöffnung (8) für Wasser befindet, dass der Mittelabschnitt (9) im Mittelteil (3) auf der einen Seite an eine kegelförmige Zuführfläche (10) und auf der anderen an eine kegelförmige Abführfläche (11) angrenzt, dass im Auslassteil (4) wenigstens zwei entgegengesetzte Anordnungen von Düsen (18) in zwei zueinander winkelrechten Ebenen angebracht sind, dass die Düsen (18) mit ihrer Strahlrichtung schräg nach vorne zum Mittelabschnitt (9) gerichtet und derart angeordnet sind, dass die Strahlen an der Abführfläche (11) entlang, durch das Netz (23) im Bereich des Mittelabschnittes (9), an der Zuführfläche (10) vorbei und durch die Wasserauslassöffnung (8) hinaus frei passieren können, ohne wesentlichen Widerstand von einem Teil der Vorrichtung zu erfahren.

2. Vorrichtung nach Anspruch 1, **dadurch gekennzeichnet, dass** die Düsen (18) derart ausgeführt und angeordnet sind, dass sowohl der Verteilerwinkel als auch der Abstand der Düsen von der Mittellinie der Vorrichtung einstellbar sind.

3. Vorrichtung nach Anspruch 1, **dadurch gekennzeichnet, dass** der Auslassabschnitt (13) im Auslassteil (4) sich kegelförmig erweitert in Form einer Ausführfläche (15) zum Auslassende (16) hin.

**Claims**

1. A device for cleaning fish nets, **characterized** in that the device (1) in its central area has a substantially cylindrical or cone-shaped through hole (24) for a net (23), which hole is defined by an inlet section (5) in an inlet part (2), a central section (9) in a central part (3) and an outlet section (13) in an outlet part (4), in that in the area between said inlet part (2) and said central part (3) an outlet hole (8) for water is disposed, in that the central section (9) in said central part (3) is defined on one of its sides by a tapering upstream surface (10) and on its other side by a tapering downstream surface (11), in that in said outlet part (4) at least two diametrically opposed arrangements of nozzles (18) are disposed in two planes, perpendicular to each other, in that said nozzles (18) with their jet direction slant forwards towards central section (9)and are disposed in such a way, that the jets can pass along the downstream surface (11), through the net (23) in the area of the central section (9), along the upstream surface (10) and freely out through the water outlet (8) without being subjected to any substantial resistance from any part of the device.

2. A device according to claim 1, **characterized** in that said nozzles (18) are designed and disposed in such a way, that the distribution angle of the nozzles as well as the distance of the nozzles from the central axis of the device can be adjusted.

3. A device according to claim 1, **characterized** in that said outlet section (13) in said outlet part (4) is extended conically as an outlet surface (15) towards the outlet end (16).

**Revendications**

1. Dispositif pour le nettoyoge des filets de pêcheurs, caractérisé en ce que le dispositif (1) est pourvu en position centrale d'un passage (24) de forme essentiellement cylindrique ou légèrement conique pour un filet (23), le dit passage étant constitué d'une section d'entrée (5) dons une partie d'entrée (2), d'une section médiane (9) dans une partie médiane (3) et d'une section de sortie (13) dons une partie de sortie (4), que dans la zone entre la partie d'entrée (2) et la partie médiane (3) une ouverture de sortie (8) pour de l'eau est prévue, que la section médiane (9) dans la partie médiane (3) touche sur un côté une surface d'alimentation (10) conique et sur l'autre côté une surface d'évacuation (11) conique, que dons la partie de sortie (4) au moins deux arrangements opposés de buses (18) sont disposés dans deux plans perpendiculaires, que les buses (18) sont disposées avec leur direction de jet inclinée vers l'avant vers la section médiane (9) et de sorte que les jets peuvent passer librement le long de la surface d'évacuation (11), le filet (23) dans la zone de la section médiane (9), le long de la surface d'alimentation (10) et par l'ouverture de sortie d'eau (8) sans subir une résistance substantielle d'une partie du dispositif.

2. Dispositif selon la revendication 1, caractérisé en ce que les buses (18) sont conçues et disposées de sorte qu'aussi bien l'angle de distribution qu'également la distance des buses de la ligne médiane du dispositif peuvent être ajustés.

3. Dispositif selon la reventication 1, caractérisé en ce que la section de sortie (13) de la partie de sortie (4) s'évase de façon conique sous forme d'une surface d'évacuation (15) vers l'extrémité de sortie (16).